# EUROPEAN PATENT APPLICATION

(11) **EP 4 530 115 A1**
(43) Date of publication of application: **02.04.2025**
(21) Application number: 24203182.1
(22) Date of filing: 27.09.2024
(51) Int. Cl.: B60L 3/00, B60L 15/08, B60L 15/20, B60L 15/22, B60L 53/24, B60L 53/62, H02J 7/00, H02J 7/06, H02M 3/155, H02M 3/158, H02M 7/5387

(54) **POWERTRAIN, CONTROL METHOD FOR MOTOR CONTROLLER, AND ELECTRIC VEHICLE**

(30) Priority: 27.09.2023 CN 202311270515
(71) Applicant: Huawei Digital Power Technologies Co., Ltd., Shenzhen, Guangdong 518043 (CN)
(72) Inventor: Zhang, Ben, Shenzhen,Guangdong, 518043 (CN); Duan, Guozhao, Shenzhen,Guangdong, 518043 (CN); Fan, Litao, Shenzhen,Guangdong, 518043 (CN)
(74) Representative: Isarpatent

(57) **Abstract**

This application provides a powertrain, a control method for a motor controller, and an electric vehicle. The powertrain includes a motor controller and a drive motor, the motor controller includes three bridge arms connected in parallel, each bridge arm includes an upper bridge arm switching transistor and a lower bridge arm switching transistor, one end of each bridge arm is configured to connect one end of a direct current power supply and one end of a power battery, the other end is configured to connect to the other end of the power battery, bridge arm midpoints of the three bridge arms are configured to connect to three phase windings of the drive motor, and a bridge arm midpoint of one of the three bridge arms is configured to connect to the other end of the direct current power supply. In response to that the direct current power supply switches from outputting a direct current to stopping outputting the direct current, an upper bridge arm switching transistor of one bridge arm of the other two bridge arms of the three bridge arms is turned on and a lower bridge arm switching transistor of the other bridge arm of the other two bridge arms is turned on. The power battery is configured to supply power to one phase winding and another phase winding, to reduce slipping sound and improve an NVH feature of the electric vehicle.

## Description

### TECHNICAL FIELD

This application relates to the field of new energy vehicles, and more specifically, to a powertrain, a control method for a motor controller, and an electric vehicle.

### BACKGROUND

With the popularization of new energy electric vehicles, resolving charging problems of the electric vehicles has become a top priority in industry development, and a high voltage platform has become a development trend. Currently, a voltage of a power battery configured on an electric vehicle usually ranges from 600 V to 800 V However, there is a charging pile of 220 V to 500 V in early market development. In other words, the charging pile that can output only a voltage of 220 V to 500 V cannot directly charge the electric vehicle with the voltage of 600 V to 800 V Therefore, to adapt to some charging piles in an existing market, a power supply circuit may be disposed in the electric vehicle, and the power supply circuit may reuse a motor winding in a motor to boost a voltage output by the charging pile and then provide the voltage to the power battery.

However, a problem caused by reusing the motor winding in the motor is as follows: When the charging pile actively stops supplying power, for example, the charging pile is powered off in an emergency due to a fault, a user clicks on a human-machine operation interface of the charging pile to end power supply, or the user operates a user application (application, app) to end power supply of the charging pile, a current of the motor winding is rapidly reduced, and torque release of the motor is rapidly reduced to zero. In this case, a series of mechanical structures such as a wheel, a half shaft, and a reducer gear in the electric vehicle are slipped and rebound. As a result, a noise, vibration, and harshness (noise, vibration, harshness, NVH) feature of the electric vehicle is poor.

Therefore, how to improve the NVH feature when the charging pile actively stops supplying power is an urgent problem to be resolved.

### SUMMARY

This application provides a powertrain, a control method for a motor controller, and an electric vehicle, to control a current of a motor to slowly decrease when a direct current power supply stops supplying power, thereby controlling torque of the motor to slowly decrease, and weakening slipping sound of a mechanical structure. This solvess an NVH problem of an electric vehicle.

According to a first aspect, a powertrain is provided, where the powertrain includes a motor controller and a drive motor, the motor controller includes three bridge arms connected in parallel, each bridge arm includes an upper bridge arm switching transistor and a lower bridge arm switching transistor, one end of each bridge arm is configured to connect one end of a direct current power supply and one end of a power battery, the other end of each bridge arm is configured to connect to the other end of the power battery, bridge arm midpoints of the three bridge arms are configured to connect to three phase windings of the drive motor, and a bridge arm midpoint of one of the three bridge arms is configured to connect to the other end of the direct current power supply. In response to that the direct current power supply switches from outputting a direct current to stopping outputting the direct current, an upper bridge arm switching transistor of one of the other two bridge arms of the three bridge arms connects a positive electrode of the power battery to one phase winding of the drive motor, and a lower bridge arm switching transistor of the other bridge arm of the two bridge arms connects a negative electrode of the power battery to another phase winding of the drive motor, where the power battery is configured to supply power to the one phase winding and the another phase winding.

Based on the foregoing solution, in response to that the direct current power supply switches from outputting the direct current to stopping outputting the direct current, the motor controller can switch the current of the motor from being provided by the direct current power supply to being provided by the power battery by controlling turning on and turning off of the upper bridge arm switching transistors and the lower bridge arm switching transistors of the three bridge arms in the inverter circuit, so that the current of the motor is controllable when the direct current power supply stops supplying power. Then, the current of the motor is controlled to gradually decrease, the slipping sound of the mechanical structure is weakened, and the NVH of the electric vehicle is improved.

With reference to the first aspect, in some implementations of the first aspect, in a process in which the power battery is configured to supply the power to the one phase winding and the another phase winding, in response to that a current in the one phase winding or the another phase winding being less than a first preset threshold, upper bridge arm switching transistors and lower bridge arm switching transistors of the other two bridge arms are turned off.

It should be understood that when a current value in the one phase winding or the another winding of the motor decreases to the first preset threshold, it can be considered that torque of the motor is basically released. Therefore, after the switching transistor stops working, the motor does not rebound and there is no slipping sound.

It should be understood that a specific value of the first preset threshold is not limited in this application. For example, the first threshold is 0. For another example, the first threshold is 0.05 A.

Based on the foregoing solution, when the direct current power supply switches from outputting the direct current to stopping outputting the direct current, and the current of the motor is less than the preset first preset threshold, a switching transistor in a three-phase inverter bridge in the motor controller stops working, thereby reducing energy consumption of the motor controller while improving NVH performance of the electric vehicle.

With reference to the first aspect, in some implementations of the first aspect, in a process in which the power battery is configured to supply the power to the one phase winding and the another phase winding, magnitudes of currents in the one phase winding and the another phase winding first remain unchanged and then decrease, or first rise and then decrease.

It should be understood that, after the power battery supplies power to the motor winding, a peak value of the current in the motor winding can be greater than or equal to a current value before the direct current power supply stops outputting the direct current power, and then remains unchanged and then decreases, or increases first and then decreases.

Based on the foregoing solution, the motor controller in the powertrain can control, in respond to that the direct current power supply switches from outputting the direct current to stopping outputting the direct current, by controlling work of the switching transistor in the inverter circuit, the current in the motor winding to remain unchanged and then decrease or to first increase and then decrease.

With reference to the first aspect, in some implementations of the first aspect, in response to that the direct current power supply outputs the direct current, the upper bridge arm switching transistor of any bridge arm of the other two bridge arms is turned on at a first duty cycle, and the inverter circuit is configured to receive, through a first capacitor, power supplied by the direct current power supply; and in response to that the direct current power supply switches from outputting a direct current to stopping outputting the direct current, the upper bridge arm switching transistor of any bridge arm of the other two bridge arms is turned on at a second duty cycle, where after the inverter circuit is configured to receive power supplied by the first capacitor and output a current to the one phase winding of the motor for first preset duration, the power battery is configured to supply power to the one phase winding and the another phase winding, and the second duty cycle is greater than the first duty cycle.

It should be understood that the first capacitor can be a capacitor in an in-vehicle charging system and/or an output capacitor inside the direct current power supply.

It should be understood that a specific value of the first preset duration is not limited in embodiments of this application. After the first preset duration, the motor controller controls the switching transistor in the bridge arm, so that the power supplied by the first capacitor to the motor winding is switched to the power supplied by the power battery to the motor winding.

Based on the foregoing solution, after the direct current power supply switches from outputting the direct current to stopping outputting the direct current, the motor controller can control the switching transistors in each bridge arm to supply the power to the motor through a capacitor, and slow down a current decreasing speed of the motor by increasing a duty cycle of the switching transistor. In addition, after the first preset duration, the power battery is switched to supply the power to the motor winding.

With reference to the first aspect, in some implementations of the first aspect, in response to that the direct current power supply outputs the direct current, the upper bridge arm switching transistor of any bridge arm of the other two bridge arms is turned on at a first duty cycle, and the inverter circuit is configured to receive, through a first capacitor, power supplied by the direct current power supply; and in response to that the direct current power supply switches from outputting the direct current to stopping outputting the direct current, the upper bridge arm switching transistor of any bridge arm of the other two bridge arms is turned on at a second duty cycle, where the second duty cycle is greater than the first duty cycle.

It should be understood that, in this implementation, after the direct current power supply switches from outputting the direct current to stopping outputting the direct current, the motor controller can control turning on and turning off of the switching transistor in the inverter circuit of the controller, so that the first capacitor supplies power to the motor winding continuously, and the motor controller slows down the current decreasing speed of the motor by increasing the duty cycle of the switching transistor.

With reference to the first aspect, in some implementations of the first aspect, within the first preset duration, in response to that a current in any phase winding of the motor is less than or equal to a rebound torque current, the upper bridge arm switching transistor of any bridge arm of the other two bridge arms is turned on at a third duty cycle, and the third duty cycle is greater than the second duty cycle.

It should be understood that the rebound torque current is a current required for maintaining torque that the motor does not slip.

Based on the foregoing solution, after the direct current power supply switches from outputting the direct current to stopping outputting the direct current, the motor controller can control the switching transistors in each bridge arm to supply the power to the motor through a capacitor, and slow down a current decreasing speed of the motor by increasing a duty cycle of the switching transistor after the current of the motor is reduced to the rebound torque current.

With reference to the first aspect, in some implementations of the first aspect, after the direct current power supply switches from outputting the direct current to stopping outputting the direct current for second preset duration, the inverter circuit is configured to receive the power supplied by the power battery and output a current to the motor winding. In the second preset duration, an upper bridge arm switching transistor of at least one bridge arm of the other two bridge arms is turned on, and the three phase windings of the motor form a freewheeling loop.

With reference to the first aspect, in some implementations of the first aspect, after the direct current power supply switches from outputting the direct current to stopping outputting the direct current for third preset duration, an upper bridge arm switching transistor of at least one bridge arm of the other two bridge arms is turned on, and the three phase windings of the motor form a freewheeling loop. In the third preset duration, the inverter circuit is configured to receive power supplied by the power battery and output a current to the motor winding.

It should be understood that, in embodiments of this application, after the direct current power supply switches from outputting the direct current to stopping outputting the direct current, the motor controller can control turning on and turning off of the switching transistors in the three bridge arms, so that the power battery first supplies power to the motor winding, then, the motor winding is short-circuited and freewheeled, or the motor winding is first short-circuited and freewheeled, and then the power battery supplies the power to the motor winding, thereby slowing down a decreasing speed of the current of the motor winding.

With reference to the first aspect, in some implementations of the first aspect, the one bridge arm is a first bridge arm, and the other two bridge arms are a second bridge arm and a third bridge arm respectively, where in a process in which the inverter circuit is configured to receive the power supplied by the direct current power supply, in response to that a rotor angle of the motor is within a first angle range, an upper bridge arm switching transistor of the second bridge arm is turned on; in response to that the rotor angle of the motor is within a second angle range, an upper bridge arm switching transistor of the third bridge arm is turned on; the first angle range includes 330°<θ<30° and 150°<θ<210°; and the second angle range includes 30°<θ<90° and 210°<θ<270°.

As an example instead of a limitation, the first angle range is 270°<θ<30° and 90°<θ<210°, and the second angle range is 30°<θ<90° and 210°<θ<270°.

As an example instead of a limitation, the first angle range is 330°<θ<30° and 150°<θ<210°, and the second angle range is 30°<θ<150° and 210°<θ<330°.

With reference to the first aspect, in some implementations of the first aspect, in response to that the direct current power supply switches from outputting the direct current to stopping outputting the direct current and the rotor angle of the motor is within the first angle range, the upper bridge arm switching transistor of the second bridge arm and a lower bridge arm switching transistor of the third bridge arm are turned on; and in response to that the direct current power supply switches from outputting the direct current to stopping outputting the direct current and the rotor angle of the motor is within the second angle range, the upper bridge arm switching transistor of the third bridge arm and a lower bridge arm switching transistor of the second bridge arm are turned on.

With reference to the first aspect, in some implementations of the first aspect, in response to that the direct current power supply switches from outputting the direct current to stopping outputting the direct current and the rotor angle of the motor is within the first angle range, the upper bridge arm switching transistor of the second bridge arm is turned on and the lower bridge arm switching transistor of the third bridge arm is turned off, and the three phase windings of the motor form the freewheeling loop; and in response to that the direct current power supply switches from outputting the direct current to stopping outputting the direct current and the rotor angle of the motor is within the second angle range, the upper bridge arm switching transistor of the third bridge arm is turned on and the lower bridge arm switching transistor of the second bridge arm is turned off, and the three phase windings of the motor form the freewheeling loop.

Based on the foregoing solution, the motor controller can control, in respond to that the direct current power supply switches from outputting the direct current to stopping outputting the direct current, based on an angle range in which the motor rotor is located, turning on and turning off of the switching transistors in the three bridge arms, to weaken the slipping sound and jitter within a full angle range, and improve the NVH performance of electric vehicle.

With reference to the first aspect, in some implementations of the first aspect, in response to that an electrical parameter output by the direct current power supply decreases to a preset reference threshold within preset duration, it is determined that the direct current power supply switches from outputting the direct current to stopping outputting the direct current. Alternatively, in response to that a difference between the electrical parameter output by the direct current power supply and a reference electrical parameter reaches a preset reference threshold, it is determined that the direct current power supply switches from outputting the direct current to stopping outputting the direct current. The electrical parameter includes at least one of a current and a voltage.

Based on the foregoing solution, the powertrain can determine, based on electrical parameter such as the current and the voltage, that the direct current voltage stops supplying power to the power battery, to provide a current to the motor through the capacitor or the power battery, and further control torque of the motor.

According to a second aspect, a control method for a motor controller is provided, where the motor controller includes three bridge arms connected in parallel, each bridge arm includes an upper bridge arm switching transistor and a lower bridge arm switching transistor, one end of each bridge arm is configured to connect one end of a direct current power supply and one end of a power battery, the other end of each bridge arm is configured to connect to the other end of the power battery, bridge arm midpoints of the three bridge arms are configured to connect to three phase windings of the drive motor, a bridge arm midpoint of one of the three bridge arms is configured to connect to the other end of the direct current power supply. The control method includes: in response to that the direct current power supply switches from outputting a direct current to stopping outputting the direct current, controlling an upper bridge arm switching transistor of one of the other two bridge arms of the three bridge arms to connect a positive electrode of the power battery to one phase winding of the drive motor, and controlling a lower bridge arm switching transistor of the other bridge arm of the two bridge arms to connect a negative electrode of the power battery to another phase winding of the drive motor, where the power battery is configured to supply power to the one phase winding and the another phase winding.

With reference to the second aspect, in some implementations of the second aspect, the control method further includes: in response to that the direct current power supply outputs the direct current, controlling the upper bridge arm switching transistor of any bridge arm of the other two bridge arms to be turned on at a first duty cycle, and the inverter circuit is configured to receive, through a first capacitor, power supplied by the direct current power supply; and in response to that the direct current power supply switches from outputting a direct current to stopping outputting the direct current, controlling the upper bridge arm switching transistor of any bridge arm of the other two bridge arms to be turned on at a second duty cycle, where after the inverter circuit is configured to receive power supplied by the first capacitor and output a current to the one phase winding of the motor for first preset duration, the power battery is configured to supply power to the one phase winding and the another phase winding, and the second duty cycle is greater than the first duty cycle.

With reference to the second aspect, in some implementations of the second aspect, the control method further includes: within the first preset duration, in response to that a current in any phase winding of the motor is less than or equal to a rebound torque current, controlling the upper bridge arm switching transistor of any bridge arm of the other two bridge arms to be turned on at a third duty cycle, and the third duty cycle is greater than the second duty cycle.

With reference to the second aspect, in some implementations of the second aspect, the control method further includes: after the direct current power supply switches from outputting the direct current to stopping outputting the direct current for second preset duration, controlling the inverter circuit to be configured to receive the power supplied by the power battery and output a current to the motor winding; and controlling, in the second preset duration, an upper bridge arm switching transistor of at least one of the three bridge arms to be turned on, and the three phase windings of the motor form a freewheeling loop.

According to a third aspect, an electric vehicle is provided, where the electric vehicle includes a power battery and the motor controller according to any one of the first aspect or the implementations of the first aspect, the powertrain includes a motor controller and a drive motor, and the motor controller is configured to receive power supplied by the power battery and supply power to the drive motor.

For technical effects of the solutions provided in the second aspect and the third aspect, refer to corresponding descriptions in the first aspect. Details are not described again.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3 is a schematic of a circuit of a powertrain according to an embodiment of this application;
FIG. 4 is a schematic of a circuit on which current overcurrent occurs;
FIG. 5(a) to FIG. 5(d) are a schematic of circuits of a first closed loop to a fourth closed loop according to an embodiment of this application;
FIG. 6(a) and FIG. 6(b) are a schematic of circuits of a fifth closed loop and a sixth closed loop according to an embodiment of this application;
FIG. 7(a) and FIG. 7(b) are a schematic of circuits of a seventh closed loop and an eighth closed loop according to an embodiment of this application;
FIG. 8 is a diagram of a control basis according to an embodiment of this application;
FIG. 9 is a diagram of a motor current according to an embodiment of this application;
FIG. 10 is a diagram of a control signal of some switching transistors in three bridge arms according to an embodiment of this application;
FIG. 11 is a schematic of a circuit of another closed loop according to an embodiment of this application;
FIG. 12 is a diagram of another motor current according to an embodiment of this application;
FIG. 13 is a diagram of still another motor current according to an embodiment of this application; and
FIG. 14 is a schematic of another circuit of a powertrain according to an embodiment of this application.

### DESCRIPTION OF EMBODIMENTS

The following describes technical solutions of this application with reference to accompanying drawings.

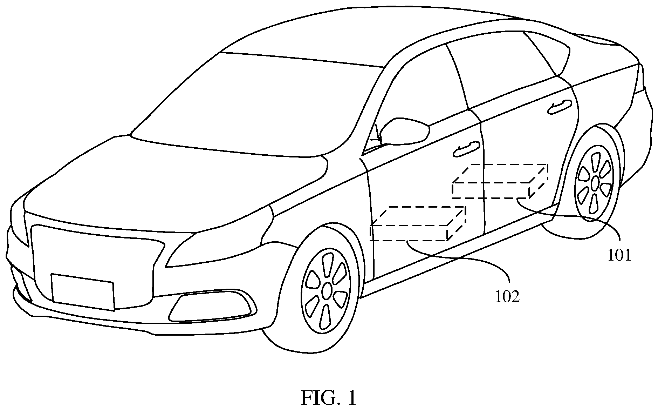

FIG. 1 is a diagram of a scenario of an electric vehicle according to an embodiment of this application. As shown in FIG. 1, the electric vehicle may include a power battery 101 and a powertrain 102. The power battery 101 is connected to the powertrain 102. When the electric vehicle is not connected to a power supply, the power battery 101 may supply power to the powertrain 102. When the electric vehicle is connected to the power supply, the power supply may charge the power battery 101 through the powertrain 102.

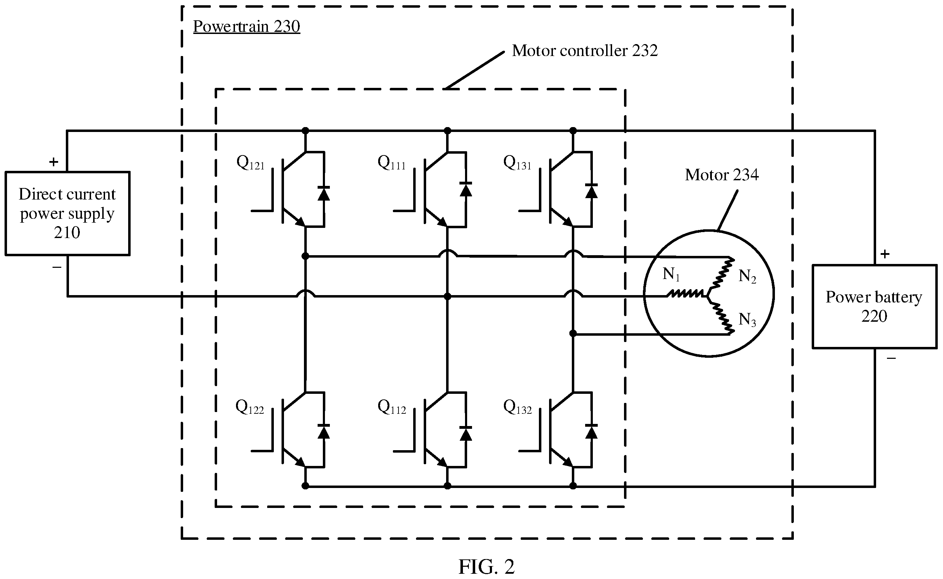

FIG. 2 is a diagram of a structure of a powertrain according to an embodiment of this application. As shown in FIG. 2, a powertrain 230 may include a drive motor 234 and a motor controller 232. The motor controller 232 includes an inverter circuit. The inverter circuit includes three bridge arms, the drive motor may include three phase windings, and bridge arm midpoints of the three bridge arms are separately connected to the three phase windings of the drive motor. The bridge arm midpoints of the three bridge arms separately output three phase currents to supply power to the three phase windings of the drive motor 234.

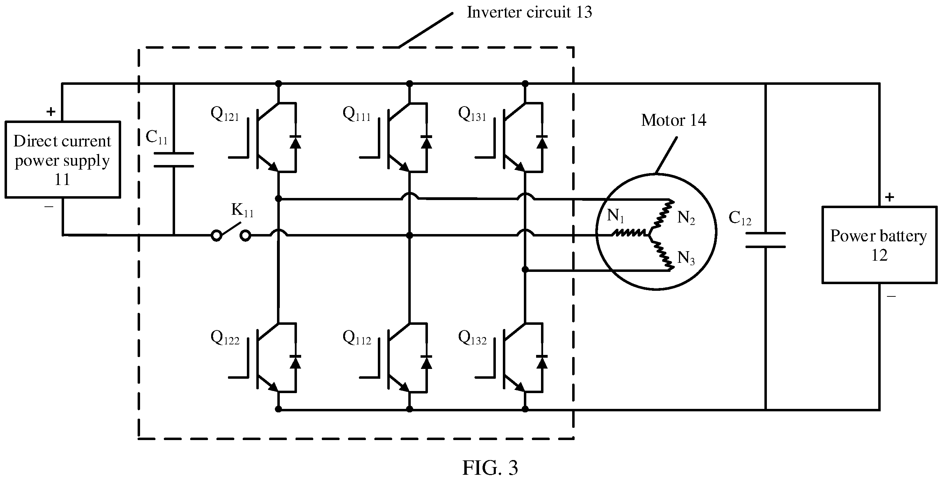

As shown in FIG. 3, the inverter circuit includes a bridge arm 1, a bridge arm 2, and a bridge arm 3 (that is, a first bridge arm, a second bridge arm, and a third bridge arm). The bridge arm 1 of the inverter circuit may include a first switching transistor Q₁₁₁ and a second switching transistor Q₁₁₂. The bridge arm 2 of the inverter circuit may include a first switching transistor Q₁₂₁ and a second switching transistor Q₁₂₂. The bridge arm 3 of the inverter circuit may include a first switching transistor Q₁₃₁ and a second switching transistor Q₁₃₂. A midpoint of the bridge arm 1 of the inverter circuit is coupled to a winding N₁ of the drive motor and outputs a phase current to the winding N₁ of the drive motor. A midpoint of the bridge arm 2 of the inverter circuit is coupled to a winding N₂ of the drive motor, and outputs a phase current to the winding N₂of the drive motor. A midpoint of the bridge arm 3 of the inverter circuit is coupled to a winding N₃ of the drive motor and outputs a phase current to the winding N₃ of the drive motor.

It should be understood that when the power battery is charged, the powertrain in embodiments of this application can be disposed between a direct current power supply 11 and a power battery 12. Specifically, a first end (for example, a positive end) of the direct current power supply is coupled to a first switching transistor in each bridge arm and a first end of the power battery 12. A second end (for example, a negative end) of the power battery 12 is coupled to a second switching transistor in each bridge arm. For example, the second end of the power battery 12 is coupled to the second switching transistor Q₁₁₂ in the bridge arm 1, the second switching transistor Q₁₂₂ in the bridge arm 2, and the second switching transistor Q₁₃₂ in the bridge arm 3.

It should be noted that each switching transistor in each bridge arm may be a metal-oxide-semiconductor field-effect transistor (metal-oxide-semiconductor field-effect transistor, MOSFET), an insulated gate bipolar transistor (insulated gate bipolar transistor, IGBT) and a diode connected in parallel, or the like.

In a possible implementation, the inverter circuit further includes a capacitor C₁₁ (that is, a first capacitor), and the capacitor C₁₁ is connected in parallel to two ends of the direct current power supply 11. For example, the capacitor C ₁₁ can be provided by an output end of the direct current power supply 11. To be specific, when a specific implementation of the direct current power supply 11 is a charging pile, an output end of the charging pile has a capacitor. In this case, the capacitor C₁₁ includes the capacitor at the output end of the charging pile and a capacitor at an output end of an inverter circuit 13.

In a possible implementation, a relay K₁₁ is disposed between the direct current power supply 11 and the first switching transistor of the bridge arm 1. A relay K₁₃ (not shown in the figure) is disposed between the direct current power supply 11 and a first end of the power battery 12. A relay K₁₄ (not shown in the figure) is disposed between a second end of the power battery 12 and the second switching transistor Q₁₃₂ of the bridge arm 3.

It should be noted that "coupling" in this application means direct or indirect connection. For example, that A is coupled to B may be that A is directly connected to B, or may be that A is indirectly connected to B by using one or more other electrical components, for example, A is directly connected to C and C is directly connected to B, to implement connection between A and B by using C.

It should be understood that a quantity of relays disposed in the inverter circuit is not limited in embodiments of this application, and specific relay setting may be performed based on an actual requirement of the inverter circuit. For example, a positive end of the direct current power supply 11 can further be coupled to a positive end of the power battery 12 through a switch K₁₅ (not shown in the figure).

It should be understood that the relay K₁₁ can be specifically implemented as a contactor, a relay, or the like, and is disposed separately from the inverter circuit 13. For example, the switch K₁₁ is disposed in a power distribution box of an electric vehicle, and the second switching transistor is disposed near a battery pack. A specific location at which the switch is disposed is not limited in embodiments of this application, provided that the switch can implement the electrical connection relationship shown in FIG. 3.

In a specific implementation, the relay K₁₁ is closed, and the first switching transistor Q₁₂₁ in the bridge arm 2 and the upper bridge switching transistor Q₁₃₁ in the bridge arm 3 are turned on. In this case, a current output by the positive electrode of the direct current power supply 11 may return to a negative electrode of the direct current power supply 11 after successively passing through the first switching transistor Q₁₂₁, the second motor winding N₂, the first motor winding N₁, and the relay K₁₁; or return to the negative end of the direct current power supply 11 after successively passing through the first switching transistor Q₁₃₁, the second motor winding N₂, the first motor winding N₁, and the relay K₁₁. In this case, each motor winding is equivalent to an inductor and is in a charging state.

When the first switching transistor Q₁₂₁ in the bridge arm 2 and the first switching transistor Q₁₃₁ in the bridge arm 2 are turned off, each motor winding is in a discharging state. After the current output by the first motor winding N₁ passes through the relay K₁₁, the direct current power supply 11, the switch K₁₃, and the power battery 12, a freewheeling diode of the second switching transistor Q₁₂₂ in the bridge arm 2 and the second motor winding N₂ may form a closed loop, or a freewheeling diode of the second switching transistor Q₁₃₂ in the bridge arm 2 and the second motor winding N₃ may form a closed loop. In this case, each motor winding is in the discharging state, a voltage at both ends of the power battery 12 is a sum of a voltage of the direct current power supply 11 and a voltage of the motor, and the voltage of the power battery 12 is greater than the voltage of the direct current power supply 11, thereby implementing voltage boosting.

In a process of charging or discharging the motor winding, the current of the motor passes through each motor winding, and torque is generated on the motor. The torque of the motor continuously acts on a reducer gear, a differential spline, and a half-axis spline of the electric vehicle. When the direct current power supply 11 is powered off in an emergency due to a fault, a user clicks on a human-machine operation interface of the charging pile (that is, the direct current power supply 11) to end power supply, or the user actively operates a user app to stop power supply of the direct current power supply 11, the current of the motor quickly decreases to a small value or even to 0. A speed is at a millisecond (ms) level. Because the current of the motor is positively correlated with the torque of the motor, a rapid decrease in the current of the motor causes a rapid decrease in the torque of the motor. Consequently, a series of mechanical structures such as a wheel, a half shaft, and a reducer gear in the electric vehicle are slipped and rebound, and slipping sound of the mechanical structure is generated, which causes a poor NVH feature of the electric vehicle.

It should be noted that, in embodiments of this application, that the direct current power supply 11 is powered off in an emergency due to a fault, or the direct current power supply 11 actively stops supplying power has a same meaning as that the direct current power supply 11 switches from outputting a direct current to stopping outputting the direct current, and can be replaced with each other.

In a solution, after detecting that the direct current power supply stops supplying power, the controller controls the relay K₁₁ to be turned off, and controls the second switching transistor Q₁₁₂ in the bridge arm 1, the switching transistor Q₁₂₁ in the bridge arm 2, and the relay transistor Q₁₃₁ in the bridge arm 3 to be turned on. In this case, the inverter circuit 13 forms a closed loop. In the closed loop, after passing through the switch K₁₂, the output current of the power battery 12 passes through the relay transistor Q₁₂₁ of the bridge arm 2, the second motor winding N₂, the first motor winding N1, and the second switching transistor Q₁₁₂ of the bridge arm 1 to form a closed loop. Alternatively, the output current of the power battery 12 passes through the relay transistor Q₁₃₁ of the bridge arm 3, the third motor winding N₂, the first motor winding N₁, and the second switching transistor Q₁₁₂ of the bridge arm 1 to form a closed loop. To be specific, the power battery 12 provides the current to the motor, and controls the current to slowly decrease, so that torque of the motor is slowly reduced, slipping sound of the mechanical structure is reduced, and an NVH feature of the electric vehicle is improved.

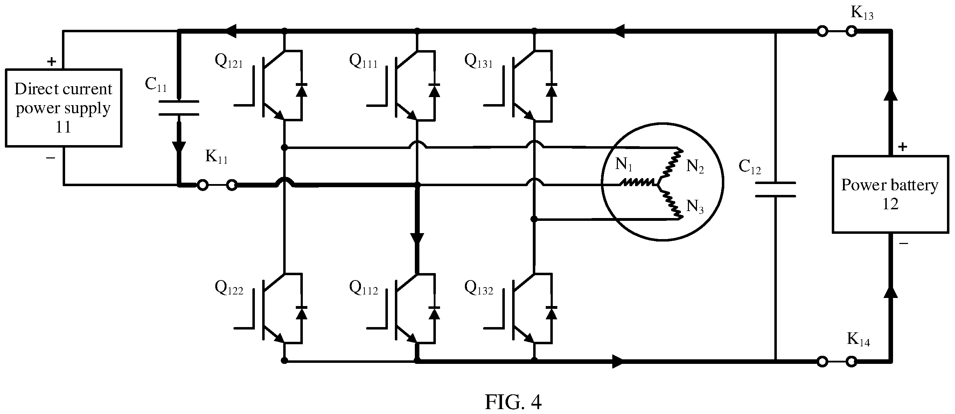

Apparently, in the foregoing method, after determining that the direct current power supply stops supplying power, the controller needs to control the relay K₁₁ to be turned off and control the second switching transistor Q₁₁₂ of the bridge arm 1 to be turned on. However, because it takes time for the relay to be physically disconnected, there is a specific delay between time when the controller controls the relay K₁₁ to be turned off and time when the relay K₁₁ is turned off. In this case, a second closed loop shown in FIG. 4 is formed. In the second closed loop, an output current of the power battery 12 returns to the power battery 12 to form a closed loop after passing through the capacitor C₁₁, the relay K₁₁, and the second switching transistor Q₁₁₂ of the bridge arm 1. That is, there is no load between the positive electrode and the negative electrode of the power battery 12, and an overcurrent phenomenon occurs.

To avoid the foregoing overcurrent problem, this application provides a motor controller, to directly enter torque takeover logic without controlling the relay K₁₁ after determining that the direct current power supply stops supplying power, to control the current of the motor to slowly decrease, and further control torque of the motor to slowly decrease. The slipping sound of the mechanical structure is controlled to be weakened, and the NVH feature of the electric vehicle is improved.

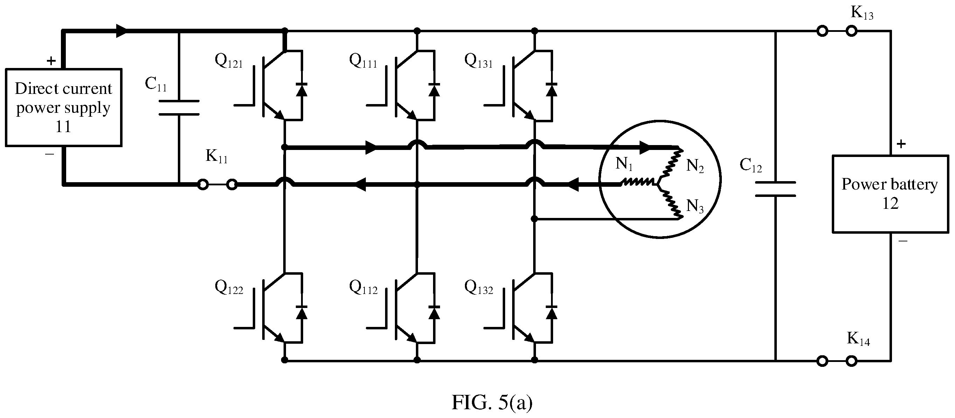

The following describes, based on FIG. 5(a) to FIG. 5(d) to FIG. 14, the motor controller provided in embodiments of this application.

First, with reference to FIG. 5(a) to FIG. 5(d), a control manner of the motor controller provided in embodiments of this application when the direct current power supply charges the power battery is described.

As shown in FIG. 5(a), the first switching transistor Q₁₂₁ of the bridge arm 2 is turned on. Therefore, an output current of a first end of the direct current power supply 11 can return to a negative end of the direct current power supply 11 through the first switching transistor Q₁₂₁, the second winding N₂, the first winding N₁, and the relay K₁₁ in sequence, thereby forming a first closed loop.

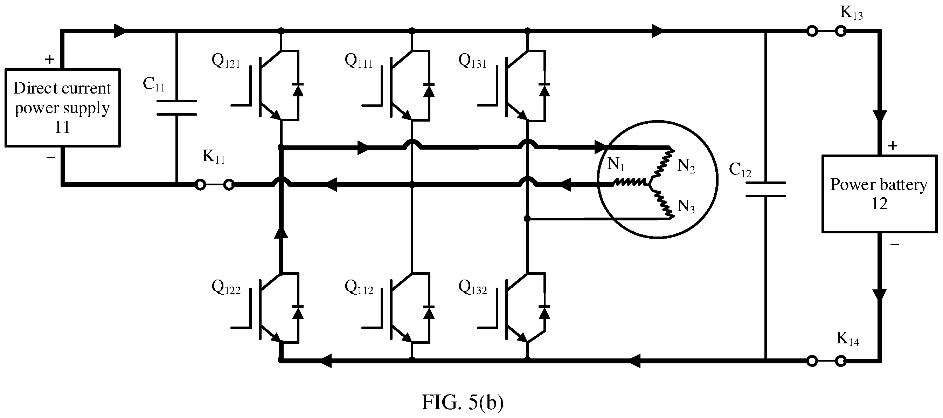

As shown in FIG. 5(b), the first switching transistor Q₁₂₁ of the bridge arm 2 is turned off. Therefore, the output current of the first end of the direct current power supply 11 can return to a second end of the direct current power supply 11 through the power battery, the second switching transistor Q₁₂₂ of the bridge arm 2, the second winding N₂, and the first winding N₁ in sequence, thereby forming a second closed loop. In this case, each motor winding is in the discharging state, a voltage at both ends of the power battery 12 is a sum of a voltage of the direct current power supply 11 and a voltage of the motor, and the voltage of the power battery 12 is greater than the voltage of the direct current power supply 11, thereby implementing voltage boosting.

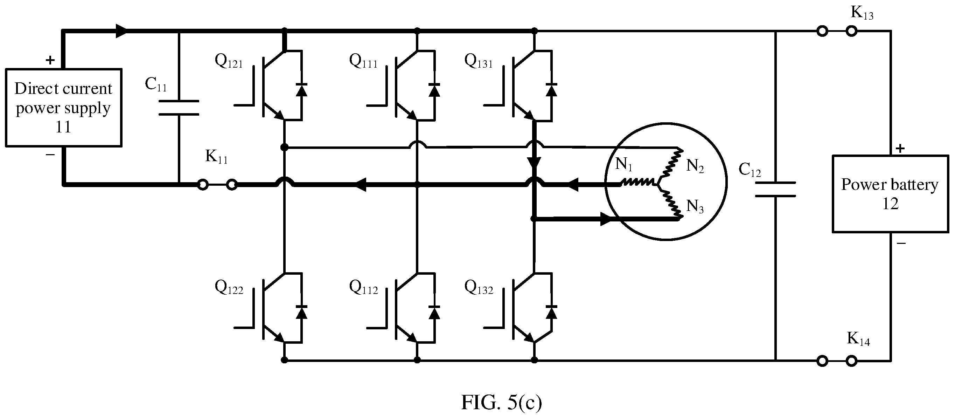

Alternatively, in another specific implementation, as shown in FIG. 5(c), the first switching transistor Q₁₃₁ of the bridge arm 3 is turned on. Therefore, the output current of the first end of the direct current power supply 11 can return to the negative end of the direct current power supply 11 through the first switching transistor Q₁₃₁, the third winding N₃, the first winding N₁, and the relay K₁₁ in sequence, thereby forming a third closed loop.

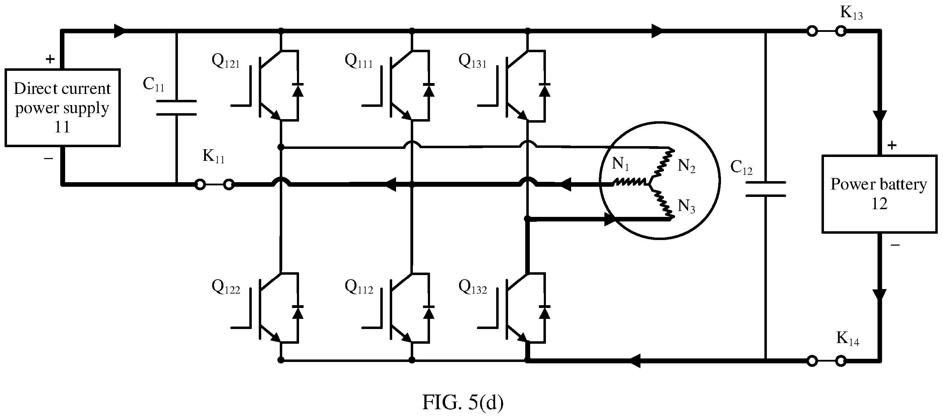

As shown in FIG. 5(d), the first switching transistor Q₁₃₁ of the bridge arm 3 is turned off. Therefore, the output current of the first end of the direct current power supply 11 can return to the second end of the direct current power supply 11 through the power battery, the second switching transistor Q₁₃₂ of the bridge arm 3, the third winding N₃, and the first winding N₁ in sequence, thereby forming a fourth closed loop. Similarly, in this case, each motor winding is in the discharging state, a voltage at both ends of the power battery 12 is a sum of a voltage of the direct current power supply 11 and a voltage of the motor, and the voltage of the power battery 12 is greater than the voltage of the direct current power supply 11, thereby implementing voltage boosting.

It should be understood that, in a process in which the direct current power supply 11 supplies power to the power battery 12, the motor controller can control the first switching transistor Q₁₂₁ of the bridge arm 2 to be turned on and the first switching transistor Q₁₃₁ of the bridge arm 3 to be turned off; or control the first switching transistor Q₁₂₁ of the bridge arm 2 to be turned off and the first switching transistor Q₁₃₁ of the bridge arm 3 to be turned on, thereby implementing switching between the first closed loop and the third closed loop.

In a possible implementation, the controller controls turning on and turning off of the first switching transistor Q₁₂₁ of the bridge arm 2 and the first switching transistor Q₁₃₁ of the bridge arm 3 based on a rotor angle of the motor. The rotor angle of the motor is an electrical angle.

Specifically, when the rotor angle is within a first angle range, the motor controller controls the first switching transistor Q₁₂₁ of the bridge arm 2 to be turned on, and controls a first switching transistor and a second switching transistor in the remaining bridge arms to be turned off. In this case, the inverter circuit 13 works in a first charging phase sequence. In other words, in this case, the inverter circuit is charged by using a W phase.

When the rotor angle is within a second angle range, the motor controller controls the first switching transistor Q₁₃₁ of the bridge arm 3 to be turned on, and controls the first switching transistor and the second switching transistor in the remaining bridge arms to be turned off. In this case, the inverter circuit 13 works in a second charging phase sequence. In other words, in this case, the inverter circuit is charged by using a U phase.

The first angle range includes 330°<θ<30° and 150°<θ<210°. The second angle range includes 30°<θ<90° and 210°<θ<270°.

As an example instead of a limitation, the first angle range is 270°<θ<30° and 90°<θ<210°, and the second angle range is 30°<θ<90° and 210°<θ<270°.

As an example instead of a limitation, the first angle range is 330°<θ<30° and 150°<θ<210°, and the second angle range is 30°<θ<150° and 210°<θ<330°.

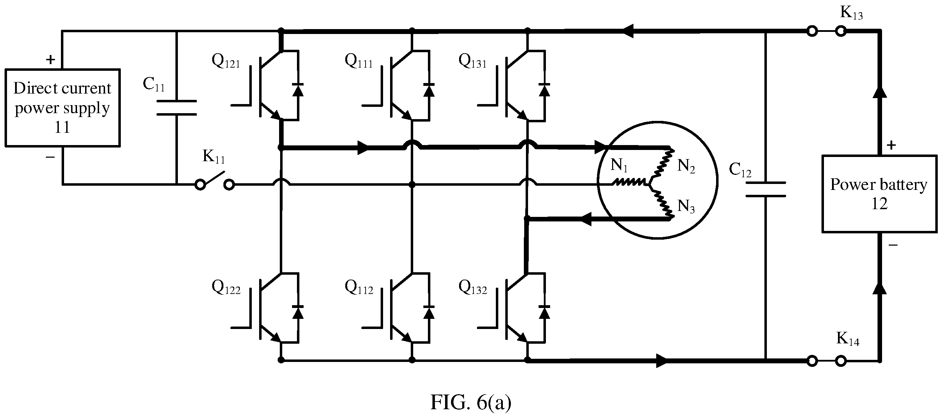

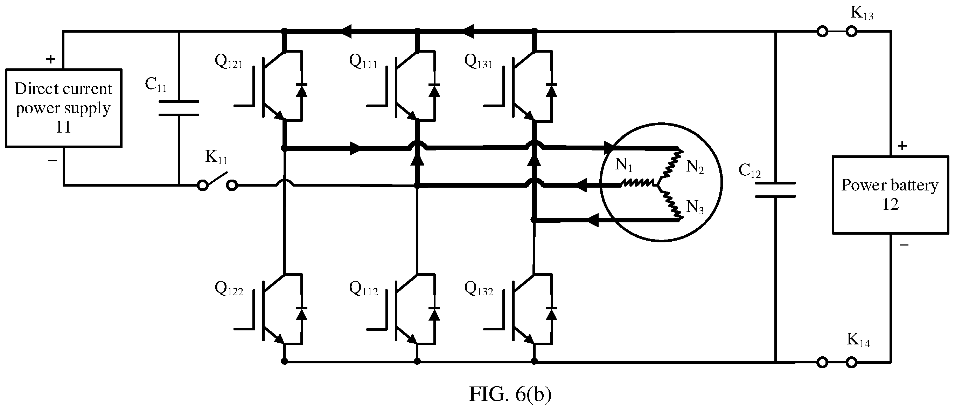

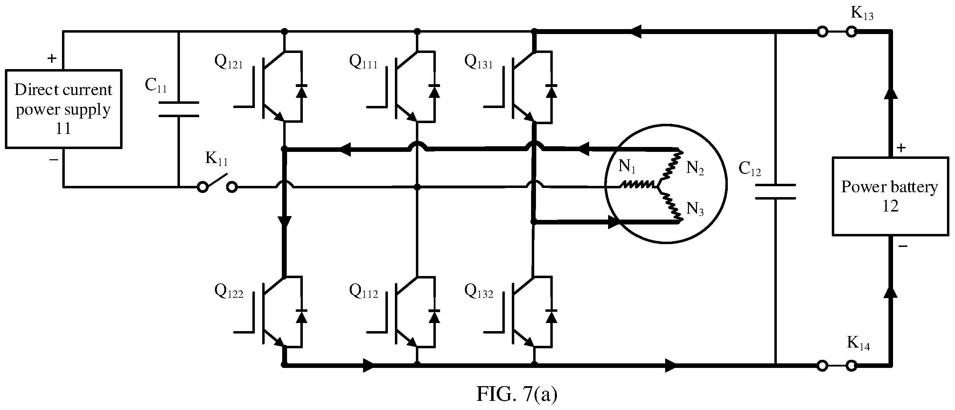

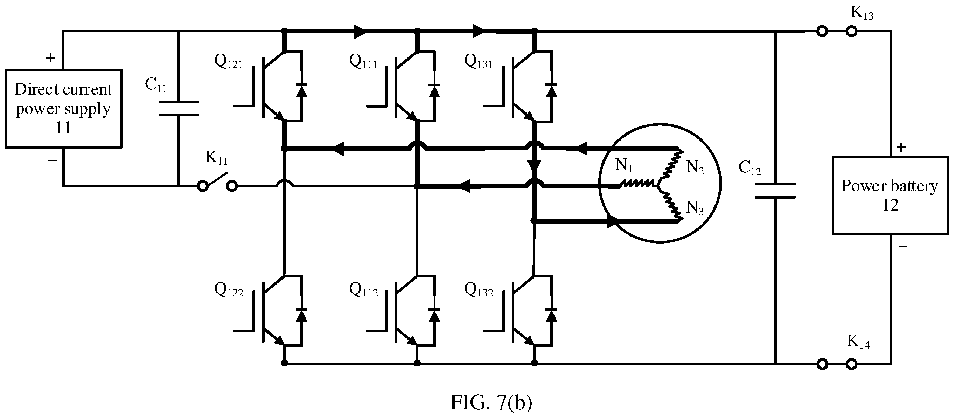

Further, in a case in which it is detected that the direct current power supply stops supplying power, the motor controller can control the first switching transistor and the second switching transistor in each bridge arm based on the rotor angle of the motor. A manner in which the controller controls the first switching transistor and the second switching transistor in each bridge arm based on the rotor angle of the motor is specifically described below with reference to FIG. 6(a) and FIG. 6(b), and FIG. 7(a) and FIG. 7(b).

In embodiments of this application, the motor controller may be specifically implemented as a micro control unit (micro control unit, MCU), a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like.

For example, the motor controller may determine, by monitoring an electrical parameter output by the direct current power supply 11, whether the direct current power supply 11 stops supplying power. The electrical parameter includes at least one of a current and a voltage. For example, if the controller detects that a voltage output by the direct current power supply 11 decreases to a first reference voltage threshold within preset duration, it is considered that the voltage output by the direct current power supply 11 decreases rapidly, and power supply is stopped. For another example, if the controller detects that a current output by the direct current power supply 11 decreases to the first reference current threshold within the preset duration, it may be considered that the current output by the direct current power supply decreases rapidly, and power supply is stopped.

Alternatively, the controller may obtain a difference between the electrical parameter output by the direct current power supply 11 and a reference electrical parameter, compare the difference with a second reference electrical parameter threshold, and determine, based on a comparison result, whether the direct current power supply 11 stops supplying power. For example, if the reference output voltage of the direct current power supply 11 is 500 V, and the controller detects that an actual voltage output by the direct current power supply 11 is 300 V, a difference between the two is 200 V If the second reference electrical parameter threshold is 100 V, the controller determines that the direct current power supply 11 stops supplying power.

It should be understood that, in embodiments of this application, the motor controller can control the first switching transistor and the second switching transistor in each bridge arm based on the rotor angle of the motor, or the controller can control the first switching transistor and the second switching transistor in each bridge arm based on a charging phase sequence of the inverter circuit.

In a possible implementation, when it is detected that the direct current power supply 11 stops supplying power, and the rotor angle of the motor is 330°<θ<30° and 150°<θ<210°, or when it is detected that the direct current power supply 11 stops supplying power, and the inverter circuit works in a first working phase sequence, the controller controls the first switching transistor Q₁₂₁ of the bridge arm 2 to be constantly turned on, and controls the second switching transistor Q₁₃₂ of the bridge arm 3 to be turned on based on PWM wave transmission.

When the second switching transistor Q₁₃₂ of the bridge arm 3 is turned on, as shown in FIG. 6(a), the inverter circuit 13 forms a fifth closed loop. In the fifth closed loop, a current output from the positive electrode of the power battery 12 returns to the negative electrode of the power battery 12 through the first switching transistor Q₁₂₁ of the bridge arm 2, the second motor winding N₂, the third motor winding N₃, and the second switching transistor Q₁₃₂ of the bridge arm 3, to form a closed loop. In this case, the power battery 12 provides a first current I₁ to the motor, and a value of the first current I₁ can be controlled by the motor controller.

When the second switching transistor Q₁₃₂ of the bridge arm 3 is turned off, as shown in FIG. 6(b), short-circuit freewheeling occurs on each motor winding, so that the inverter circuit 13 works in a sixth closed loop. In the sixth closed loop, because an inductor circuit cannot change abruptly, the output current of the first motor winding N1 passes through a parasitic diode in the first switching transistor Q₁₁₁ of the bridge arm 1, the first switching transistor Q₁₂₁ of the bridge arm 2, and the second motor winding N₂, to form a closed loop. Alternatively, the output current of the third motor winding N₃ passes through a parasitic diode in the first switching transistor Q₁₃₁ of the bridge arm 3, the first switching transistor Q₁₂₁ of the bridge arm 2, and the second motor winding N₂, to form a closed loop. The current passing through the motor is a second current I₂.

In a possible implementation, when it is detected that the direct current power supply 11 stops supplying power, and the rotor angle of the motor is 30°<θ<150° and 210°<θ<330°, or when it is detected that the direct current power supply 11 stops supplying power, and the inverter circuit works in a second working phase sequence, the controller controls the first switching transistor Q₁₃₁ of the bridge arm 3 to be turned on, and controls the second switching transistor Q₁₂₂ of the bridge arm 2 to be turned on.

When the second switching transistor Q₁₂₂ of the bridge arm 2 is turned on, as shown in FIG. 7(a), the inverter circuit 13 forms a seventh closed loop. In the seventh closed loop, a current output from the positive electrode of the power battery 12 returns to the negative electrode of the power battery 12 through the first switching transistor Q₁₃₁ of the bridge arm 3, the third motor winding N₃, the second motor winding N₂, and the second switching transistor Q₁₂₂ of the bridge arm 2, to form a closed loop. In this case, the power battery 12 provides a first current I₃ to the motor, and a value of the first current I₃ can be controlled by the motor controller.

When the second switching transistor Q₁₂₂ of the bridge arm 2 is turned off, as shown in FIG. 7(b), short-circuit freewheeling occurs on each motor winding, so that the inverter circuit 13 works in an eighth closed loop. In the eighth closed loop, because an inductor circuit cannot change abruptly, the output current of the first motor winding N1 passes through a parasitic diode in the first switching transistor Q₁₁₁ of the bridge arm 1, the first switching transistor Q₁₁₁ of the bridge arm 3, and the third motor winding N₃, to form a closed loop. Alternatively, the output current of the second motor winding N₂ passes through a parasitic diode in the first switching transistor Q₁₂₁ of the bridge arm 2, the first switching transistor Q₁₁₁ of the bridge arm 3, and the third motor winding N₃, to form a closed loop. The current passing through the motor is a second current I₄.

It should be understood that the motor controller can control, by controlling turning-on duration of the second switching transistor of the second bridge arm, turning-on duration of the second switching transistor of the third bridge arm, and the like, the current of the motor to slowly decrease, or may control the current of the motor to first increase and then slowly decrease, or may adjust a current proportion of the winding of a three-phase motor, change a torque direction of the motor, and the like. How to specifically control the current of the motor is not limited in embodiments of this application. Specifically, how to control the current of the motor may be performed based on a requirement in actual application.

It should be understood that, in the foregoing manner, based on the motor control provided in embodiments of this application, when the direct current power supply stops supplying power, the fast charging relay K₁₁ does not need to be controlled, and only the switching transistor in the bridge arms needs to be controlled, so that the current of the motor is switched from being provided by the direct current power supply to being provided by the power battery, and the current of the motor is controllable when the direct current power supply stops supplying power. The current of the motor is controlled to slowly decrease, that is, torque of the motor is controlled to slowly decrease when the direct current power supply stops supplying power, thereby weakening slipping sound of a mechanical structure and improving an NVH feature of the electric vehicle.

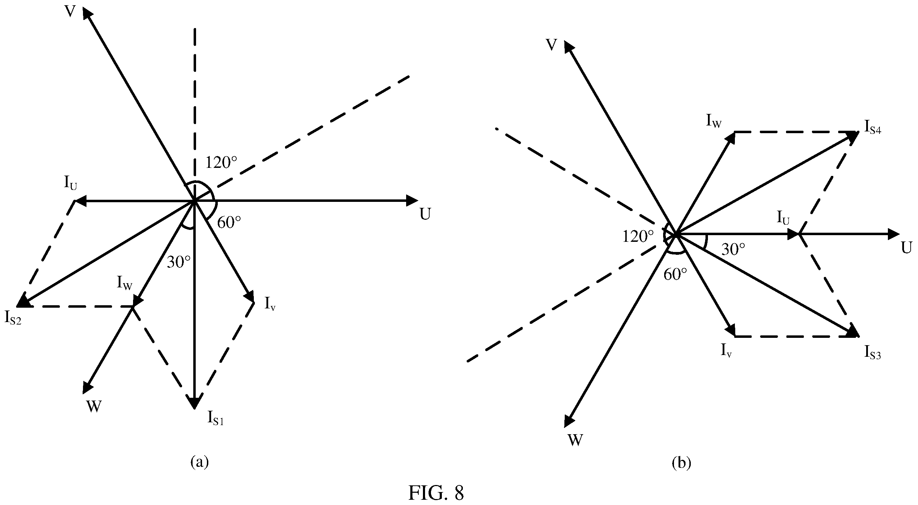

Refer to FIG. 8. The following describes a basis for the motor controller to control the switching transistors in each bridge arm based on the rotor angle of the motor in the foregoing implementations.

As shown in (a) in FIG. 8, when the motor controller controls the inverter circuit to work in the first charging phase sequence, a synthesized circuit vector is Iₛ₁. When the direct current power supply actively stops charging, the motor controller uses the fifth closed loop or the sixth closed loop to perform freewheeling. In this case, a synthesized current vector is Iₛ₂.

It is easy to understand that when a U phase is used as a 0 angle line, an attraction direction of a motor rotor is as follows:

When the angle is -90°<θ<30°, the attraction direction of the motor rotor is clockwise when being attracted by Iₛ₁ and is clockwise when being attracted by Iₛ₂.

When the angle is 90°<θ<210°, the attraction direction of the motor rotor is anticlockwise when being attracted by Iₛ₁ and is anticlockwise when being attracted by Iₛ₂.

When the angle is 30°<θ<90° or 210°<θ<270°, the attraction direction of the motor rotor when being attracted by Iₛ₁ is inconsistent with the attraction direction of the motor rotor when being attracted by Iₛ₂.

Therefore, when the motor rotor is at an angle of -90°<θ<30° or 90°<θ<210°, the motor controller can control the first switching transistor and the second switching transistor of each bridge arm, so that the inverter circuit 13 works in the fifth closed loop or the sixth closed loop. In this way, an attraction direction of the motor rotor attracted by a synthesized current vector does not change before and after the direct current power supply stops supplying power, thereby suppressing abnormal sound and jitter within the angle range.

As shown in (b) in FIG. 8, when the motor controller controls the inverter circuit to work in the second charging phase sequence, a synthesized circuit vector is Iₛ₃. When the direct current power supply actively stops charging, the motor controller uses the seventh closed loop or the eighth closed loop to perform freewheeling. In this case, a synthesized current vector is Iₛ₄.

It is easy to understand that when a U phase is used as a 0 angle line, an attraction direction of a motor rotor is as follows:

When the angle is 30°<θ<150°, the attraction direction of the motor rotor is clockwise when being attracted by Iₛ₃ and is clockwise when being attracted by Iₛ₄.

When the angle is 210°<θ<330°, the attraction direction of the motor rotor is anticlockwise when being attracted by Iₛ₃ and is anticlockwise when being attracted by Iₛ₄.

When the angle is -30°<θ<30° or 150°<θ<210°, the attraction direction of the motor rotor when being attracted by Iₛ₃ is inconsistent with the attraction direction of the motor rotor when being attracted by Iₛ₄.

Therefore, when the motor rotor is at an angle of 30°<θ<150° or 30°<θ<150°, the motor controller can control the first switching transistor and the second switching transistor of each bridge arm, so that the inverter circuit works in the seventh closed loop or the eighth closed loop. In this way, an attraction direction of the motor rotor attracted by a synthesized current vector does not change before and after the direct current power supply stops supplying power, thereby suppressing abnormal sound and jitter within the angle range.

It should be understood that the inverter circuit 13 can first form the sixth closed loop, and then form the fifth closed loop, or first form the eighth closed loop, and then form the seventh closed loop.

It should be understood that the fifth closed loop is formed after the inverter circuit 13 can form the sixth closed loop and work for a period of time (that is, second preset duration), or the seventh closed loop is formed after the inverter circuit 13 can form the eighth closed loop and work for a period of time. This is not limited in embodiments of this application.

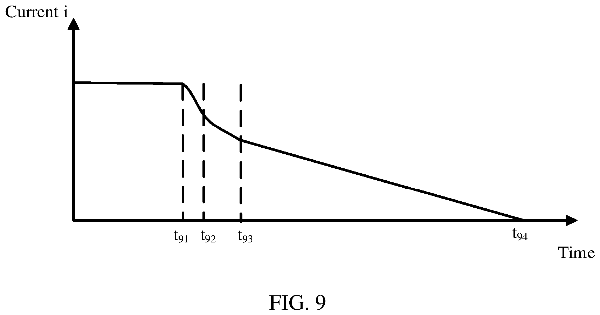

The following uses an example in which the inverter circuit switches between the fifth closed loop and the sixth closed loop for description. A current of the motor is shown in FIG. 9. Before t₉₁, the direct current power supply 11 may provide a constant current or a changing current for the motor. FIG. 9 is merely an example for describing the current of the motor before the moment t₉₁, and sets no limitation thereto.

At the moment t₉₁, the direct current power supply 11 stops supplying power, and a current i of the motor decreases. Because there is a delay in detection of the motor controller, in FIG. 9, after the moment t₉₁ and before a moment t₉₂, the motor controller can detect that the direct current power supply 11 stops supplying power, and control the second switching transistor of the bridge arm 3 to be turned on at a moment t₉₃.

Between the moment t₉₂ and the moment t₉₁, the inverter circuit 13 forms the sixth closed loop, each motor winding freewheels the motor, and the current i of the motor decreases.

After the moment t₉₃, the inverter circuit 13 forms the fifth closed loop, and the power battery 12 supplies the current to the motor, so that the current of the motor rises back and is in a controlled state. Further, the motor controller may control turning-on duration of the second switching transistor Q₁₃₂ of the bridge arm 3, so that the current of the motor can slowly decrease until the current decreases to 0 at a moment t₉₄. Because the torque of the motor does not quickly decrease to 0 at an millisecond level, the slipping sound of the mechanical structure is weakened and the NVH performance of the vehicle is improved.

It should be understood that, between the moment t₉₃ and the moment t₉₄, when the current of the motor decreases to the first preset threshold, the motor controller may control both the first switching transistor and the second switching transistor of the three bridge arms to be turned off. In this case, it may be considered that torque of the motor is basically released. Therefore, after all the switching transistors in the inverter circuit stop working, the motor does not rebound and generate the slipping sound.

It should be understood that a specific value of the first preset threshold is not limited in this application. For example, the first threshold is 0. For another example, the first threshold is 0.05 A.

It should be noted that an interval between t₉₃ and t₉₄ is long, and can reach a second (s) level.

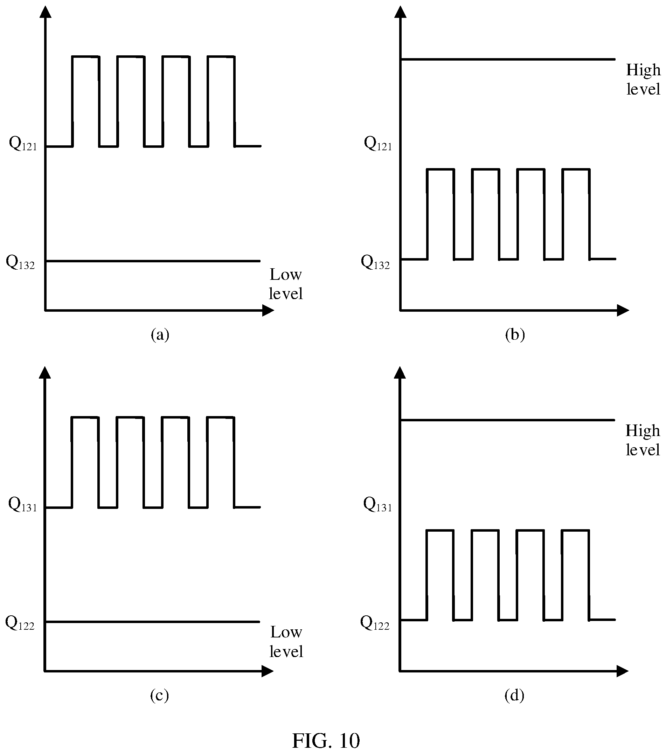

Refer to FIG. 10. The following describes a specific manner in which the motor controller controls the first switching transistor Q₁₂₁ and the second switching transistor Q₁₂₂ in the bridge arm 2 and the first switching transistor Q₁₃₁ and the second switching transistor Q₁₃₂ in the bridge arm 3.

In a possible implementation, as shown in (a) in FIG. 10, when the direct current power supply supplies power to the power battery, the motor controller sends a PWM signal to the first switching transistor Q₁₂₁ in the bridge arm 2, and sends a low level signal to the second switching transistor Q₁₃₂ in the bridge arm 3. When the PWM signal is at a high level, the first switching transistor Q₁₂₁ is turned on, and a first closed loop is formed. When the PWM signal is at a low level, the first switching transistor Q₁₂₁ is turned off, and a second closed loop is formed.

As shown in (b) in FIG. 10, when the direct current power supply stops supplying power to the power battery, the motor controller sends a high level signal to the first switching transistor Q₁₂₁ in the bridge arm 2, and sends a PWM signal to the second switching transistor Q₁₃₂ in the bridge arm 3. When the PWM signal is at a high level, the second switching transistor Q₁₃₂ is turned on, and a fifth closed loop is formed. When the PWM signal is at a low level, the second switching transistor Q₁₃₂ is turned off, and a sixth closed loop is formed.

In another possible implementation, as shown in (c) in FIG. 10, when the direct current power supply supplies power to the power battery, the motor controller sends a PWM signal to the first switching transistor Q₁₃₁ in the bridge arm 3, and sends a low level signal to the second switching transistor Q₁₂₂ in the bridge arm 2. When the PWM signal is at a high level, the first switching transistor Q131 is turned on, and a third closed loop is formed. When the PWM signal is at a low level, the first switching transistor Q₁₃₁ is turned off, and a fourth closed loop is formed.

As shown in (d) in FIG. 10, when the direct current power supply stops supplying power to the power battery, the motor controller sends a high level signal to the first switching transistor Q₁₃₁ in the bridge arm 3, and sends a PWM signal to the second switching transistor Q₁₂₂ in the bridge arm 2. When the PWM signal is at a high level, the second switching transistor Q₁₂₂ is turned on, and the seventh closed loop is formed. When the PWM signal is at a low level, the second switching transistor Q₁₂₂ is turned off, and an eighth closed loop is formed.

It should be understood that FIG. 10 only presents a control signal of one switching transistor in each bridge arm. Optionally, when the switching transistor in each bridge arm is in a freewheeling state, and when the switching transistor is specifically implemented as an IGBT, the switching transistor may not be controlled, that is, no control signal is sent to the switching transistor. When the switching transistor is specifically implemented as an MOSFET, the switching transistor may not be controlled, or control signals of the first switching transistor and the second switching transistor in each bridge arm are complementary. This is not described herein again.

In comparison with the foregoing control methods described with reference to FIG. 3 to FIG. 10, in which the power battery 12 freewheels the motor, embodiments of this application may further provide another control method in which the capacitor C₁₁ freewheels the motor, to control the torque of the motor. To be specific, the torque of the motor can be slowly reduced when the direct current power supply stops supplying power, the slipping sound of the mechanical structure is weakened, and the NVH feature of the electric vehicle is improved.

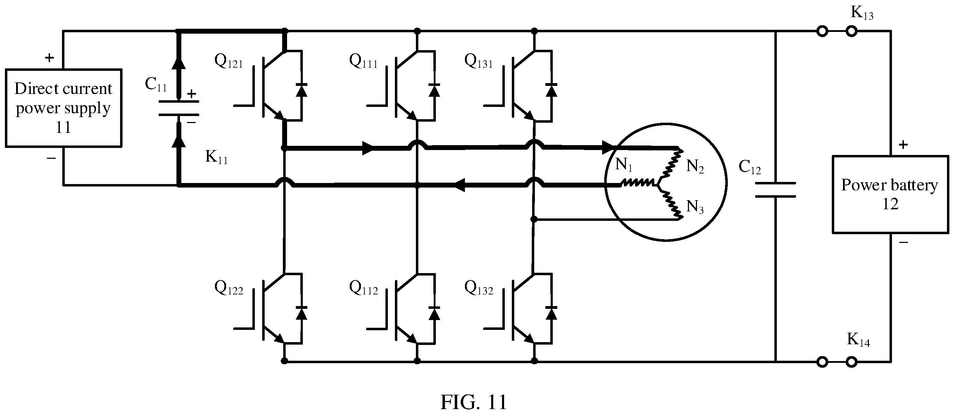

As shown in FIG. 11, after the direct current power supply stops supplying power, the motor controller can control the switching transistors in the bridge arms, so that the capacitor C₁₁ in the inverter circuit supplies power to the motor. Specifically, the motor controller can control the first switching transistor Q₁₂₁ of the bridge arm 2 to be turned on, so that an output current of the capacitor C ₁₁ can return to a negative end of the capacitor C₁₁ through the first switching transistor Q₁₂₁, the second winding N₂, the first winding N₁, and the switching transistor K₁₁ in sequence. Alternatively, the first switching transistor Q₁₃₁ of the bridge arm 3 is controlled to be turned on, so that the output current of the capacitor C₁₁ returns to the negative end of the capacitor C₁₁ (not shown in the figure) through the first switching transistor Q₁₃₁, the third winding N₃, and the first winding N₁.

It may be understood that a difference between the schematic of the circuit shown in FIG. 11 and the schematic of the circuit shown in FIG. 5(a) to FIG. 5(d) lies in that FIG. 5(a) to FIG. 5(d) are a schematic of a circuit of a closed loop formed when the direct current power supply 11 does not stop supplying power, while FIG. 11 is a schematic of a circuit of a closed loop formed when the direct current power supply 11 stops supplying power. In this case, a scenario corresponding to FIG. 11 may be that a power supply module in the direct current power supply 11 (namely, the charging pile) stops outputting a voltage, but the charging pile is still inserted into the electric vehicle. To be specific, the capacitor C₁₁ in embodiments of this application may specifically include at least one of a capacitor connected in parallel to an output port of the charging pile and a capacitor connected in parallel to an input port of a power supply circuit.

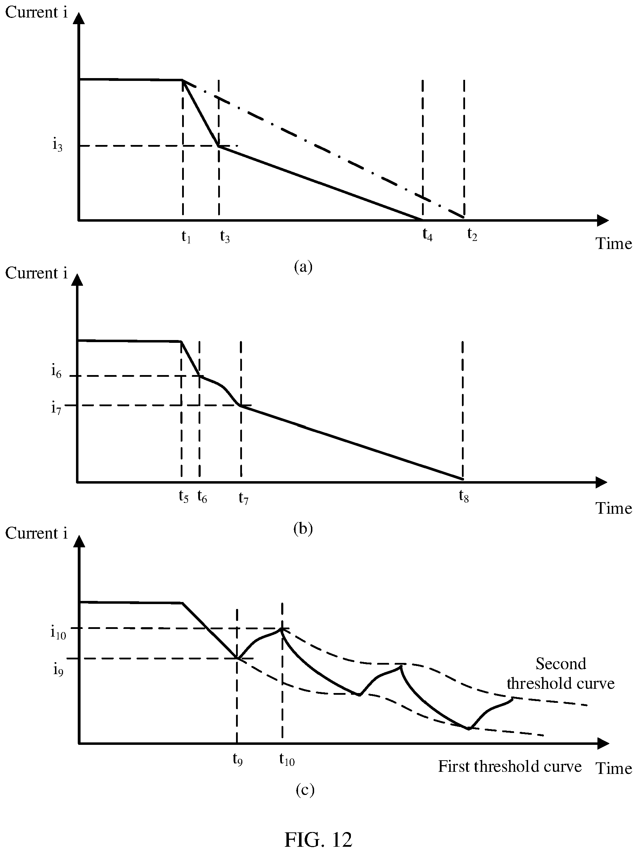

FIG. 12 is a diagram of another motor current according to an embodiment of this application. As shown in (a) in FIG. 12, before a moment t1, a direct current power supply can provide a constant current for the motor. It should be understood that before the moment t1, the direct current power supply can alternatively provide a changing current to the motor. This is not limited in embodiments of this application.

It should be understood that the motor controller can slow down a current decrease speed of the motor by increasing a duty cycle of the switching transistor.

By way of example rather than limitation, the motor controller controls the first switching transistor Q₁₂₁ of the bridge arm 2 to be turned on at a first duty cycle, and controls the first switching transistor Q₁₂₁ of the bridge arm 2 to be turned on at a second duty cycle when detecting that the direct current power supply stops supplying power. The second duty cycle is greater than the first duty cycle. For example, the second duty cycle may alternatively be a dynamically increased value.

It is easy to understand that energy on the capacitor C₁₁ continuously decreases, and the motor controller can slow down a current decrease speed of the motor by increasing turning-on duration of the first switching transistor Q₁₂₁ of the bridge arm 2 or the first switching transistor Q₁₃₁ of the bridge arm 3. In this way, a speed at which torque of the motor decreases is slowed down.

In this case, for the current of the motor, refer to a dashed line part shown in (a) in FIG. 12. At the moment t₁, the direct current power supply 11 stops supplying power, and from the moment t₁ to the moment t₂, the motor is supplied with power by the capacitor C₁₁. In addition, the motor controller increases the duty cycle of the first switching transistor Q₁₂₁ of the bridge arm 2 or the first switching transistor Q₁₂₁ of the bridge arm 3, so that the current slowly decreases with time, and the torque of the motor slowly decreases.

Optionally, the motor controller can further first control, at a fourth duty cycle, the first switching transistor Q₁₂₁ of the bridge arm 2 or the first switching transistor Q₁₃₁ of the bridge arm 3 to be turned on. The fourth duty cycle is less than the first duty cycle, so that the current of the motor decreases rapidly at this stage (not shown in the figure). Subsequently, the motor controller controls, based on a fifth duty cycle, the first switching transistor Q₁₂₁ or the first switching transistor Q₁₃₁ of the bridge arm 3 to be turned on. The fifth duty cycle is greater than the first duty cycle, so that the decreasing speed of the motor is slowed down.

By way of example rather than limitation, when it is detected that the direct current power supply 11 stops supplying power, and the current of the motor decreases to a rebound torque current, the motor controller controls, based on a third duty cycle, the first switching transistor Q₁₂₁ of the bridge arm 2 or the first switching transistor Q₁₃₁ of the bridge arm 3 to be turned on. The third duty cycle is greater than the first duty cycle or the second duty cycle. To be specific, the motor controller can control the current of the motor to decrease to the rebound torque current. The rebound torque current is a current required for maintaining torque without slipping of the motor. In other words, as long as the current of the motor is not less than the rebound torque current, the motor does not cause slipping sound of the mechanical structure.

It should be understood that a magnitude of the rebound torque current is a device attribute of the motor, and is related to selection of the motor.

When the current of the motor decreases to the rebound torque current, the motor controller can slow down a current change of the motor by increasing the duty cycle of the first switching transistor Q₁₂₁ of the bridge arm 2 or the first switching transistor Q₁₃₁ of the bridge arm 3, thereby slowing down a torque change of the motor.

In this case, for the current of the motor, refer to the solid line part shown in (a) in FIG. 12. At the moment ti, the direct current power supply 11 stops supplying power, and the motor controller can maintain the value of the first duty cycle from the moment t₁ to the moment t₃ to control the first switching transistor Q₁₂₁ of the bridge arm 2 or the first switching transistor Q₁₃₁ of the bridge arm 3. Alternatively, a duty cycle of the first switching transistor Q₁₂₁ of the bridge arm 2, or a duty cycle of the first switching transistor Q₁₃₁ of the bridge arm 3 is reduced, so that the current of the motor decreases to a rebound torque current is at the moment t₃.

At the moment t3, the motor controller increases the duty cycle of the first switching transistor Q₁₂₁ of the bridge arm 2 or the first switching transistor Q₁₃₁ of the bridge arm 3, so that a change slope of the current i of the motor decreases, that is, a current change speed of the motor is slowed down, until the current of the motor decreases to 0 at t₄.

Further, a plurality of stepped current values may be further set between the rebound torque current and a constant current provided by the direct current power supply 11 to the motor. As shown in (b) in FIG. 12. If a stepped current value i₆ is disposed between a rebound torque current i₇ and a constant current provided by the direct current power supply 11 to the motor, the direct current power supply 11 stops supplying power at a moment t₅. The motor controller can maintain the first duty cycle from the moment t₅ to the moment t₆ to control the first switching transistor Q₁₂₁ of the bridge arm 2, or the first switching transistor Q₁₃₁ of the bridge arm 3. Alternatively, the duty cycle of the first switching transistor Q₁₂₁ of the bridge arm 2 or the first switching transistor Q₁₃₁ of the bridge arm 3 is reduced, so that the current of the motor decreases to the stepped current value i₆ at the moment t₆.

At the moment t₆, the motor controller can increase the duty cycle of the first switching transistor Q₁₂₁ of the bridge arm 2 or the first switching transistor Q₁₃₁ of the bridge arm 3, so that a current change speed of the current i of the motor from the moment t₆ to the moment t₇ is slower than a current change speed from the moment t₅ to the moment t₆, and the current of the motor decreases to the rebound torque current i₇ at the moment t₇.

At the moment t₇, the motor controller further increases the duty cycle of the first switching transistor Q₁₂₁ of the bridge arm 2 or the first switching transistor Q₁₃₁ of bridge arm 3, so that a change speed of the current i of the motor from the moment t₇ to the moment t₈ is slower than a change speed of the current from the moment t₆ to the moment t₇.

In some other possible implementations, when it is detected that the direct current power supply 11 stops supplying power, the current of the motor decreases to a first preset current threshold i₉ at a moment t₉, and the motor controller controls the first switching transistor Q₁₂₁ of the bridge arm 2 or the first switching transistor Q₁₃₁ of the bridge arm 3 to be turned on, so that the current i of the motor starts to increase from i₉, and increases to a second preset current threshold i₁₀ at a moment t₁₀. At the moment t₁₀, the motor controller controls the first switching transistor Q₁₂₁ of the bridge arm 2 or the first switching transistor Q₁₃₁ of the bridge arm 3 to be turned off. The second preset current threshold i₁₀ is greater than the first preset current threshold i₉.

Optionally, the first preset current threshold i₉ may be any value in a first current threshold curve, and the second preset current threshold i₁₀ may be any value in a second current threshold curve. In this case, for the current of the motor, refer to (c) in FIG. 12. In this figure, values of the first preset current threshold and the second preset current threshold are changed. In addition, the first switching transistor Q₁₂₁ of the bridge arm 2 or the first switching transistor Q₁₃₁ of the bridge arm 3 is alternately controlled to be turned on or off between the first preset current threshold and the second preset current threshold, to slowly decrease the current of the motor.

In another possible implementation, because energy stored in the capacitor C₁₁ is small, the motor controller can control the switching transistors of the bridge arms, so that the capacitor C₁₁ first freewheels the motor, and then is switched to the power battery to freewheel the motor.

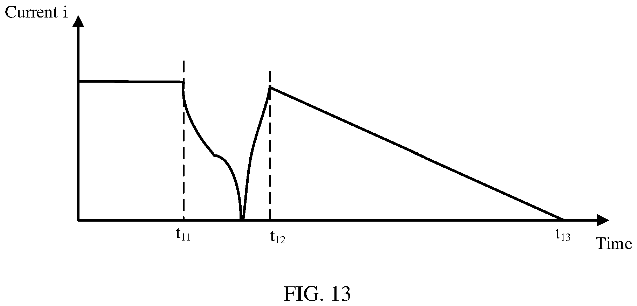

FIG. 13 is a diagram of still another motor current according to an embodiment of this application. As shown in FIG. 13, before a moment t₁₁, the direct current power supply may provide a constant current for the motor. It should be understood that before the moment t₁₁, the direct current power supply may alternatively provide a changing current to the motor. This is not limited in embodiments of this application.

At the moment t₁₁, the direct current power supply 11 stops supplying power to the power battery 12, and the capacitor C₁₁ replaces the direct current power supply 11 to supply power to the motor. However, because the capacitor C₁₁ is small, the current i of the motor decreases between the moment t₁₁ and a moment t₁₂.

At the moment t12, the motor controller detects that the direct current power supply stops supplying power, and further controls the first switching transistor Q₁₂₁ of the bridge arm 2 and the second switching transistor Q₁₃₂ of the bridge arm 3, or the first switching transistor Q₁₃₁ of the bridge arm 3 and the second switching transistor Q₁₂₂ of the bridge arm 2 to be turned on. In this case, the power battery 12 freewheels the motor, so that the current of the motor rises back and is in a controlled state. Further, the motor controller can control turning-on duration of the second switching transistor Q₁₃₂ of the bridge arm 3 or the second switching transistor Q₁₂₂ of the bridge arm 2, so that the current of the motor can slowly decrease until the current decreases to 0 at a moment t₁₃. Because the torque of the motor does not quickly decrease to 0 at an ms level, the slipping sound of the mechanical structure is weakened and the NVH performance of the vehicle is improved.

It should be understood that, after the current of the motor rises back, the motor controller can further maintain the current of the motor by controlling the switching transistor of each bridge arm.

It should be noted that an interval between t₁₂ and t₁₃ is long, and can reach a second (s) level.

It should be noted that all manners in which the motor controller shown in FIG. 12 controls the duty cycles of the switching transistors in the bridge arms may be applied to this implementation. The following uses an example for description.

As an example instead of a limitation, after the direct current power supply 11 stops supplying power for first preset duration, the motor controller can further control, based on the second duty cycle, the first switching transistor Q₁₂₁ of the bridge arm 2 to be turned on and control the second switching transistor Q₁₃₂ of the bridge arm 3 to be turned on. Alternatively, the first switching transistor Q₁₃₁ of the bridge arm 3 is controlled to be turned on and the second switching transistor Q₁₂₂ of the bridge arm 2 is controlled to remain turned on based on the second duty cycle, so that the capacitor C₁₁ supplies power to the motor and the power battery 12 supplies power to the motor (not shown in the figure).

It should be noted that the motor controller provided in this embodiment of this application may further include an inverter circuit of another topology.

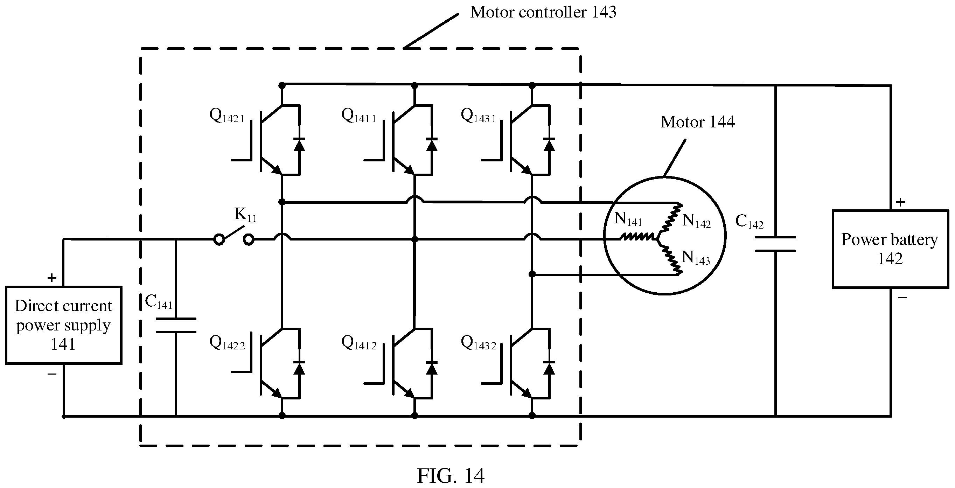

As an example instead of a limitation, FIG. 14 is a schematic of another circuit of a powertrain according to an embodiment of this application. As shown in FIG. 14, a first switching transistor in each bridge arm of the motor controller is coupled to a first end of a power battery 142, and a second switching transistor in each bridge arm is coupled to a direct current power supply 141 and a second end of the power battery 142. In addition, a midpoint of the bridge arm is coupled to a first end of the direct current power supply 141. Same as the motor controller shown in FIG. 3, a midpoint of each bridge arm couples a motor winding corresponding to each bridge arm. In FIG. 14, first ends of the direct current power supply 141 and the power battery 142 are positive ends, the other ends of the direct current power supply 141 and the power battery 142 are negative ends.

It should be understood that for specific descriptions of a connection manner and a quantity of relays in FIG. 14, refer to FIG. 3. Details are not described herein again.

It should be understood that an implementation principle in which the motor controller reuses the motor winding in the motor to boost a voltage output by the direct current power supply 141 and provide the voltage to the power battery 142 is the same as that in FIG. 3, provided that a control manner of the first switching transistor in each bridge arm is exchanged with the control manner of the second switching transistor. Details are not described herein again.

It should be understood that, after the direct current power supply 141 stops supplying power, the motor controller can control switching transistors in each bridge arm, and perform freewheeling on the motor through the power battery, or perform freewheeling on the motor through the capacitor C₁₁, or first perform freewheeling on the motor through the capacitor C₁₁, and then switch to perform freewheeling on the motor by using the power battery. This is not limited in embodiments of this application. For a specific implementation principle, refer to the description in FIG. 4 to FIG. 13. Only a control manner of the first switching transistor in each bridge arm needs to be exchanged with a control manner of the second switching transistor. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A powertrain, wherein the powertrain comprises a motor controller and a drive motor, the motor controller comprises three bridge arms connected in parallel, each bridge arm comprises an upper bridge arm switching transistor and a lower bridge arm switching transistor, one end of each bridge arm is configured to connect one end of a direct current power supply and one end of a power battery, the other end of each bridge arm is configured to connect to the other end of the power battery, bridge arm midpoints of the three bridge arms are configured to connect to three phase windings of the drive motor, and a bridge arm midpoint of one of the three bridge arms is configured to connect to the other end of the direct current power supply; and
in response to that the direct current power supply switches from outputting a direct current to stopping outputting the direct current, an upper bridge arm switching transistor of one of the other two bridge arms of the three bridge arms connects a positive electrode of the power battery to one phase winding of the drive motor, and a lower bridge arm switching transistor of the other bridge arm of the two bridge arms connects a negative electrode of the power battery to another phase winding of the drive motor, wherein the power battery is configured to supply power to the one phase winding and the another phase winding.

2. The powertrain according to claim 1, wherein in a process in which the power battery is configured to supply the power to the one phase winding and the another phase winding, in response to a current in the one phase winding or the another phase winding being less than a first preset threshold, upper bridge arm switching transistors and lower bridge arm switching transistors of the other two bridge arms are turned off.

3. The powertrain according to claim 1 or 2, wherein in a process in which the power battery is configured to supply the power to the one phase winding and the another phase winding, magnitudes of currents in the one phase winding and the another phase winding first remain unchanged and then decrease, or first rise and then decrease.

4. The powertrain according to any one of claims 1 to 3, wherein in response to that the direct current power supply outputs the direct current, the upper bridge arm switching transistor of any bridge arm of the other two bridge arms is turned on at a first duty cycle, and the inverter circuit is configured to receive, through a first capacitor, power supplied by the direct current power supply; and
in response to that the direct current power supply switches from outputting a direct current to stopping outputting the direct current, the upper bridge arm switching transistor of any bridge arm of the other two bridge arms is turned on at a second duty cycle, wherein after the inverter circuit is configured to receive power supplied by the first capacitor and output a current to the motor winding for first preset duration, the power battery is configured to supply power to the one phase winding and the another phase winding, and the second duty cycle is greater than the first duty cycle.

5. The powertrain according to claim 4, wherein a magnitude of the current in the motor winding decreases within the first preset duration, and a current decreasing speed is greater than a current decreasing speed in the motor winding in a process in which the inverter circuit is configured to receive the power supplied by the power battery and output a current to the motor winding.

6. The powertrain according to claim 4 or 5, wherein within the first preset duration, in response to a current in any phase winding of the motor being less than or equal to a rebound torque current, the upper bridge arm switching transistor of any bridge arm of the other two bridge arms is turned on at a third duty cycle, and the third duty cycle is greater than the second duty cycle.

7. The powertrain according to any one of claims 1 to 6, wherein after the direct current power supply switches from outputting the direct current to stopping outputting the direct current for second preset duration, the inverter circuit is configured to receive the power supplied by the power battery and output a current to the motor winding, wherein
in the second preset duration, an upper bridge arm switching transistor of at least one bridge arm of the other two bridge arms is turned on, and the three phase windings of the motor form a freewheeling loop.

8. The powertrain according to any one of claims 1 to 7, wherein the one bridge arm is a first bridge arm, and the other two bridge arms are a second bridge arm and a third bridge arm respectively, wherein
in a process in which the inverter circuit is configured to receive the power supplied by the direct current power supply, in response to that a rotor angle of the motor is within a first angle range, an upper bridge arm switching transistor of the second bridge arm is turned on;
in response to that the rotor angle of the motor is within a second angle range, an upper bridge arm switching transistor of the third bridge arm is turned on;
the first angle range comprises 330°<θ<30° and 150°<θ<210°; and
the second angle range comprises 30°<θ<90° and 210°<θ<270°.

9. The powertrain according to claim 8, wherein
in response to that the direct current power supply switches from outputting the direct current to stopping outputting the direct current and the rotor angle of the motor is within the first angle range, the upper bridge arm switching transistor of the second bridge arm and a lower bridge arm switching transistor of the third bridge arm are turned on; and
in response to that the direct current power supply switches from outputting the direct current to stopping outputting the direct current and the rotor angle of the motor is within the second angle range, the upper bridge arm switching transistor of the third bridge arm and a lower bridge arm switching transistor of the second bridge arm are turned on.

10. The powertrain according to claim 8 or 9, wherein
in response to that the direct current power supply switches from outputting the direct current to stopping outputting the direct current and the rotor angle of the motor is within the first angle range, the upper bridge arm switching transistor of the second bridge arm is turned on and the lower bridge arm switching transistor of the third bridge arm is turned off, and the three phase windings of the motor form the freewheeling loop; and
in response to that the direct current power supply switches from outputting the direct current to stopping outputting the direct current and the rotor angle of the motor is within the second angle range, the upper bridge arm switching transistor of the third bridge arm is turned on and the lower bridge arm switching transistor of the second bridge arm is turned off, and the three phase windings of the motor form the freewheeling loop.

11. A control method for a motor controller, wherein the motor controller comprises three bridge arms connected in parallel, each bridge arm comprises an upper bridge arm switching transistor and a lower bridge arm switching transistor, one end of each bridge arm is configured to connect one end of a direct current power supply and one end of a power battery, the other end of each bridge arm is configured to connect to the other end of the power battery, bridge arm midpoints of the three bridge arms are configured to connect to three phase windings of the drive motor, a bridge arm midpoint of one of the three bridge arms is configured to connect to the other end of the direct current power supply, and the control method comprises:
in response to that the direct current power supply switches from outputting a direct current to stopping outputting the direct current, controlling an upper bridge arm switching transistor of one of the other two bridge arms of the three bridge arms to connect a positive electrode of the power battery to one phase winding of the drive motor, and controlling a lower bridge arm switching transistor of the other bridge arm of the two bridge arms to connect a negative electrode of the power battery to another phase winding of the drive motor, wherein the power battery is configured to supply power to the one phase winding and the another phase winding.

12. The control method according to claim 11, wherein the control method further comprises:
in response to that the direct current power supply outputs the direct current, controlling the upper bridge arm switching transistor of any bridge arm of the other two bridge arms to be turned on at a first duty cycle, wherein the inverter circuit is configured to receive, through a first capacitor, power supplied by the direct current power supply; and
in response to that the direct current power supply switches from outputting a direct current to stopping outputting the direct current, controlling the upper bridge arm switching transistor of any bridge arm of the other two bridge arms to be turned on at a second duty cycle, wherein after the inverter circuit is configured to receive power supplied by the first capacitor and output a current to the one phase winding of the motor for first preset duration, the power battery is configured to supply power to the one phase winding and the another phase winding, and the second duty cycle is greater than the first duty cycle.

13. The control method according to claim 12, wherein the control method further comprises:
in the first preset duration, in response to a current in any phase winding of the motor being less than or equal to a rebound torque current, controlling the upper bridge arm switching transistor of any bridge arm of the other two bridge arms to be turned on at a third duty cycle, wherein the third duty cycle is greater than the second duty cycle.

14. The control method according to any one of claims 11 to 13, wherein the control method further comprises:
after the direct current power supply switches from outputting the direct current to stopping outputting the direct current for second preset duration, controlling the inverter circuit to be configured to receive the power supplied by the power battery and output a current to the motor winding; and
controlling, in the second preset duration, an upper bridge arm switching transistor of at least one of the three bridge arms to be turned on, wherein the three phase windings of the motor form a freewheeling loop.

15. An electric vehicle, wherein the electric vehicle comprises the powertrain and the power battery according to any one of claims 1 to 10, the powertrain comprises a motor controller and a drive motor, and the motor controller is configured to receive power supplied by the power and supply power to the drive motor.
